# EUROPÄISCHE PATENTANMELDUNG

(11) **EP 3 780 359 A1**
(43) Veröffentlichungstag der Anmeldung: **17.02.2021**
(21) Anmeldenummer: 19192102.2
(22) Anmeldetag: 16.08.2019
(51) Int. Cl.: H02K 9/06, H02K 3/51, H02K 3/52, H02K 17/24

(54) **LÄUFERWICKLUNG MIT LÜFTEREFFEKT**

(71) Anmelder: Siemens Aktiengesellschaft, 80333 München (DE)
(72) Erfinder: Brenner, Robin, 94148 Kirchham (DE); Schönbauer, Norbert, 94072 Bad Füssing (DE); Wimmer, Patrick, 94072 Bad Füssing (DE)

(57) **Zusammenfassung**

Die Erfindung betrifft eine Doppelt gespeiste Asynchronmaschine (1) mit einem Stator (3) mit einem Wicklungssystem (4) der über einen Luftspalt (6) mit einem Wicklungssystem (8) eines Läufers (7) wechselwirkt, wobei das Wicklungssystem (8) an den Stirnseiten (10) Wickelköpfe (9) ausbildet, wobei zumindest einer der Stirnseiten (10) Mittel zur Kühlung aufweist.

## Beschreibung

Die Erfindung betrifft eine doppelt gespeiste Asynchronmaschine mit einem Läufer, der ein in Nuten eines magnetfeldführenden angeordnetes Wicklungssystem aufweist.

Doppelt gespeiste Asynchronmaschinen weisen sowohl im Läufer als auch im Stator symmetrische mehrsträngige Wicklungen auf, die in Strang- und Polzahl übereinstimmen. Derartige doppelt gespeiste Asynchronmaschinen werden vor allem bei Windkraftgeneratoren eingesetzt.

Nachteilig dabei ist, dass mit erhöhter Anforderung an die Leistungsdichte die Generatoren in ihrer Leistung durch die maximale Betriebstemperatur begrenzt sind.

Bekannt ist allgemein, dass auf Rotoren Wellenlüfter vorgesehen werden, die durch die Betriebsdrehzahl eine gewünschte Belüftung erzeugen.

Dieser nimmt jedoch in axialer Richtung Bauraum in Anspruch.

Ausgehend davon liegt der Erfindung zugrunde, insbesondere bei einer doppelt gespeisten Asynchronmaschine eine Kühlung des Läufers vorzusehen, die raumoptimiert ausgeführt ist.

Die Lösung der gestellten Aufgabe gelingt durch eine doppelt gespeiste Asynchronmaschine mit einem Stator mit einem Wicklungssystem der über einen Luftspalt mit einem Wicklungssystem eines Läufers wechselwirkt, wobei das Wicklungssystem an den Stirnseiten Wickelköpfe ausbildet, wobei zumindest einer der Stirnseiten Mittel zur Kühlung aufweist.

Durch das direkte Anbringen von Mitteln zur Kühlung am Wickelkopf selbst kann auf einen Wellenlüfter verzichtet werden, der axial aufträgt, so dass der gesamte Längenausdehnung des Läufers und damit der doppelt gespeisten Asynchronmaschine reduziert werden kann.

Dabei werden besonders am Wickelkopf des Läufers axial abstehende Lüfterfahnen angebracht, die für eine dementsprechende Luftverwirbelung im Betrieb der doppelt gespeisten Asynchronmaschine sorgen.

Durch einen vorgegebenen Neigungswinkel der Lüfterflügel zu ihrer Bewegungsrichtung und einer derartigen Ausgestaltung der Lüfterfahnen kann eine radiale und/oder axiale Luftführung forciert werden. Dabei können diese Lüfterfahnen so ausgerichtet sein, dass sie auch eine axiale Luftströmung im Bereich des Blechpakets des Läufers verursachen. Der Kühlluftstrom streicht dabei entweder entlang des Läufers und/oder wird durch Kühlkanäle im Läufer geführt.

Optional können natürlich auch die Lüfterfahnen so ausgerichtet sein, dass sie auch einen radialen Luftstrom generieren, um somit nicht nur den eigenen Wickelkopf, sondern auch gegebenenfalls den Wickelkopf eines Stators der doppelt gespeisten Asynchronmaschine zu kühlen.

In einer anderen Ausgestaltung ist direkt am Wickelkopf des Läufers eine Deckscheibe angebracht, an dem selbst Lüfterfahnen angeordnet sind. Damit kann bereits vorab eine derartiger Deckscheibe ausgeführt bzw. hergestellt werden, die nur noch als komplette Einheit an den Wickelkopf angebracht werden muss. Auch hier können durch Durchbrüche oder die Lüfterfahnen dementsprechende Luftströmungen unterstützt bzw. generiert werden.

Vorzugsweise sind die Lüfterfahnen und/oder die Deckscheibe aus elektrischem Isolationsmaterial, um die elektrisch aufgrund der Nähe zu den Wickelköpfen keine Überschläge zu erhalten.

Besonders für höhere Drehzahlen erweist es sich von Vorteil, wenn die Deckscheibe im radial äußeren Bereich des Wickelkopfes des Läufers Klauenansätze aufweist, um so den Fliehkräften des Wickelkopfes des Läufers im Betrieb der doppelt gespeisten Asynchronmaschine entgegen zu wirken.

Des Weiteren kann der Deckring auch dazu angezogen werden, dass für eventuelle Zuleitungen von einem Schleifringsystem zu dem Wicklungssystem des Läufers die Litzenleiter dort fixiert werden, um so die Fliehkraftbeanspruchungen auf den Litzenleiter zu reduzieren.

Die Erfindung sowie weitere vorteilhafte Ausgestaltungen der Erfindung werden anhand der folgenden Ausführungsbeispiele näher erläutert. Darin zeigen:
- FIG 1: eine doppelt gespeiste Asynchronmasche in ihrem grundsätzlichen Aufbau,
- FIG 2: einen Läufer mit Lüfterflügel,
- FIG 3: eine Seitenansicht der Darstellung von FIG 2,
- FIG 4: eine Seitenansicht eines weiteren Läufers,
- FIG 5: eine Seitenansicht dieses Läufers nach FIG 4,
- FIG 6: ein weiterer Längsschnitt eines Läufers.

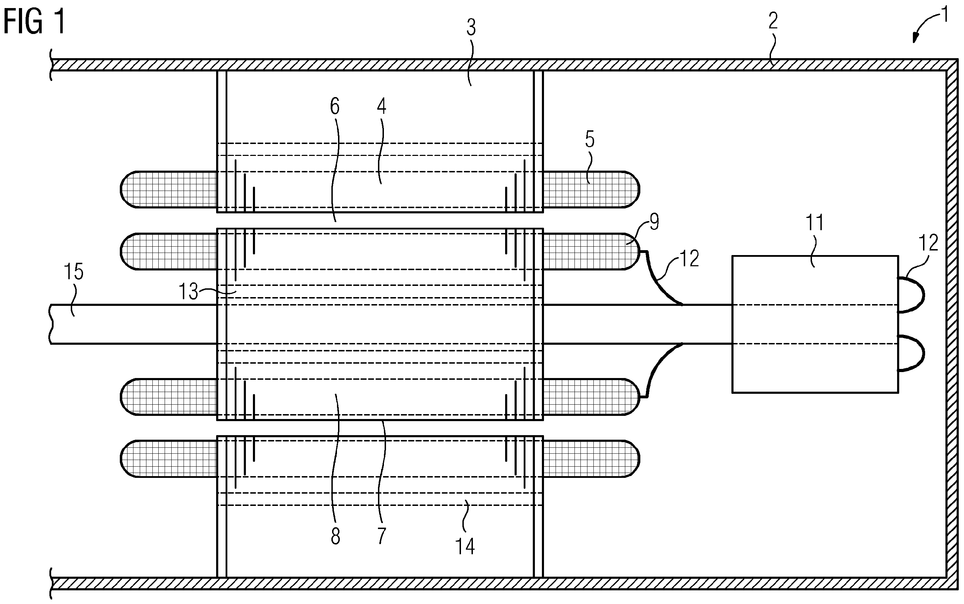

FIG 1 zeigt in einem prinzipiellen Längsschnitt eine doppelt gespeiste Asynchronmaschine 1 mit einem Gehäuse 2, das beispielsweise auch als Gondel eine Windkraftanlage sein kann.

Innerhalb dieses Gehäuses 2 ist ein Stator 3 angeordnet, der aus axial geschichteten Blechen aufgebaut ist. In zu einem Luftspalt 6 weisende Nuten des Stators 3 ist ein Wicklungssystem 4 angeordnet, das an den Stirnseiten des Stators 3 Wickelköpfe 5 ausbildet. Durch den Luftspalt 6 vom Stator 3 beabstandet, ist der Läufer 7 angeordnet, der drehfest mit einer Welle 15 verbunden ist und die in nicht näher dargestellten Lagern gehalten ist. Die Welle 15 dient dabei entweder als Antriebswelle für industrielle Anwendungen als Motor oder aber als Abtriebswelle, beispielsweise eines Rotorflügels einer Windkraftanlage, so dass die doppelt gespeiste Asynchronmaschine, in diesem Fall als Generator arbeitet.

Der Läufer 7 weist ein Wicklungssystem 8 auf, das an den Stirnseiten des Läufers 7 Wickelköpf 9 ausbildet.

Bei der doppelt gespeisten Asynchronmaschine 1 liegen nunmehr symmetrische mehrsträngige Wicklungen vor, die in Strang- und Polzahl von Läufer 7 und Stator 3 übereinstimmen.

Die Wicklung 8 des Läufers 7 wird über Zuleitungen 12 eines Schleifringsystem 11 gespeist. Diese Zuleitungen 12 verlaufen beispielsweise innerhalb eines Abschnitts der Welle 15, die in diesen Abschnitt dann als Hohlwelle ausgeführt ist.

Um nun auch in den beengten räumlichen Verhältnissen des Gehäuses 2 eine ausreichende Kühlwirkung auch des Läufers 7 zu erzielen, weisen die Wickelköpfe 9 des Läufers zumindest an einem axialen Ende Lüfterfahnen 16 auf.

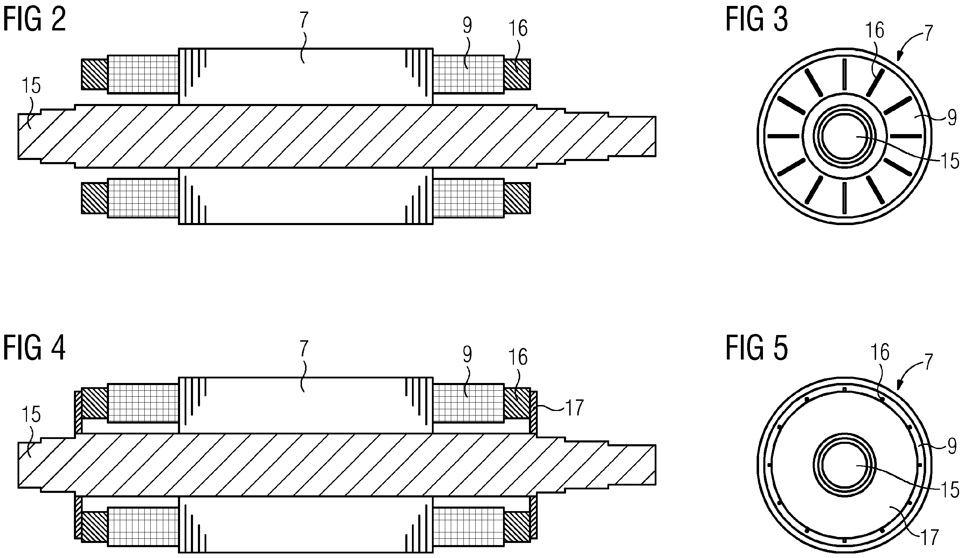

Die Darstellung nach FIG 2 zeigt an beiden Wickelköpfen 9 Lüfterfahnen 16, was zu einer Verwirbelung der Luft innerhalb des Gehäuses 2 im Betrieb der doppelt gespeisten Asynchronmaschine 1 führt. Die Lüfterfahnen 16 können dabei nach der Montage des Wicklungssystems 9 im Läufer 7 angebracht werden.

Sie können auch ebenso während der Montage des Wicklungssystems 8, also beim Wickelvorgang selbst mit integriert - also eingebunden - werden. Am fertigen Produkt ist dies, beispielsweise wie in FIG 3 dargestellt, durch radial weisende Kühlfahnen 16 zu sehen, die in Umfangsrichtung nahezu äquidistant angeordnet sind.

Durch ihre Formgebung und auch ihre radiale Ausrichtung, beispielsweise durch einen vorgebbaren Neigungswinkel, kann die Luftströmung dabei dementsprechend eingestellt werden. Somit findet dann eine Luftverwirbelung innerhalb des Gehäuses 2 statt, was gegebenenfalls auch die Wickelköpfe 5, 9 mit kühlt. Es ist außerdem ein innerer Kühlkreislauf herstellbar, wobei durch die jeweils angeordneten Lüfterfahnen 16 am Wickelkopf 9 des Läufers 7 ein Kreislauf aufrechterhalten wird, der sich beispielsweise über die Kühlkanäle 13 des Läufers 7 und die Kühlkanäle 14 des Stators 3 schließt.

In einer weiteren Ausführung gemäß FIG 4 weisen die Lüfterfahnen an ihren axialen Enden, also abgewandt vom Wickelkopf eine Deckscheibe 17 auf, dies dient zur Vereinfachung der Montage oder auch zur Gestaltung der Luftströmung.

Eine derartige Gestaltung in einer Seitenansicht ist ebenso FIG 5 zu entnehmen.

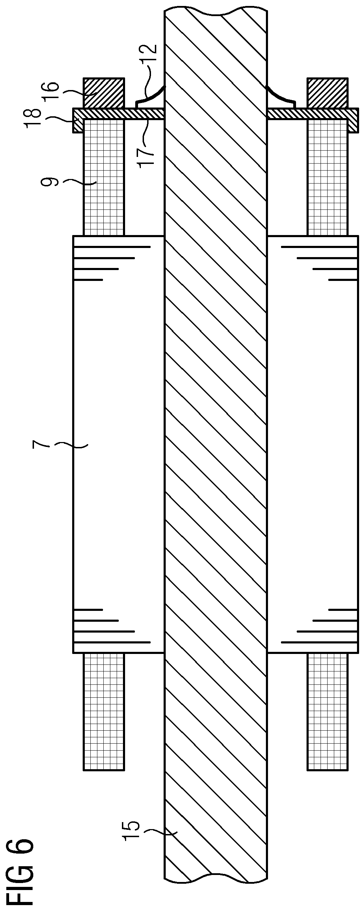

FIG 6 zeigt einen Läufer 7, bei dem sich eine Deckscheibe 17 direkt axial an den Wickelkopf 9 anschließt und auf der dem Wickelkopf 9 abgewandten Seite des Wickelkopfes 9 Lüfterfahnen 16 aufweist. Ergänzend dazu weist diese Deckscheibe 17 Klauenansätze 18 auf, die in Richtung Stirnseite des Läufers 7 weisen. Somit können Fliehkräfte des Wickelkopfes 9 des Läufers 7 aufgenommen werden.

## Patentansprüche

1. Doppelt gespeiste Asynchronmaschine (1) mit einem Stator (3) mit einem Wicklungssystem (4) der über einen Luftspalt (6) mit einem Wicklungssystem (8) eines Läufers (7) wechselwirkt, wobei das Wicklungssystem (8) an den Stirnseiten (10) Wickelköpfe (9) ausbildet, wobei zumindest einer der Stirnseiten (10) Mittel zur Kühlung aufweist.

2. Doppelt gespeiste Asynchronmaschine (1) nach Anspruch 1, **dadurch gekennzeichnet, dass** die Mittel zur Kühlung als von dem Wickelkopf (9) axial abstehenden Lüfterfahnen (16) ausgebildet sind, die direkt am Wickelkopf (9) angebracht sind.

3. Doppelt gespeiste Asynchronmaschine (1) nach Anspruch 2, **dadurch gekennzeichnet, dass** die Lüfterfahnen radial und/oder axial geneigt sind, derart dass sich ein radialer und/oder axialer Kühlluftstrom einstellt.

4. Doppelt gespeiste Asynchronmaschine (1) nach einem der vorhergehenden Ansprüche, **dadurch gekennzeichnet, dass** an der Stirnseite (10) im Bereich der Wickelköpfe (9) eine Deckscheibe (17) vorgesehen ist, die axial unmittelbar vor oder am Wickelkopf (9) angebracht ist, und die Lüfterfahnen (16) aufweist.

5. Doppelt gespeiste Asynchronmaschine (1) nach Anspruch 4, **dadurch gekennzeichnet, dass** die Deckscheibe (17) in Umfangsrichtung verteilt Durchbrüche aufweist, um auch einen axial gerichteten Kühlluftstrom zu ermöglichen.

6. Doppelt gespeiste Asynchronmaschine (1) nach Anspruch 5, **dadurch gekennzeichnet, dass** auf der Deckscheibe (17) die Lüfterfahnen (16) radial und/oder axial so geneigt sind, dass sich ein vorgebbarer Kühlluftstrom einstellt.

7. Doppelt gespeiste Asynchronmaschine (1) nach einem der vorhergehenden Ansprüche, **dadurch gekennzeichnet, dass** die Lüfterfahnen (16) und soweit vorhanden die Deckscheibe (17) aus Isolationsmaterial sind.

8. Doppelt gespeiste Asynchronmaschine (1) nach einem der vorhergehenden Ansprüche, **dadurch gekennzeichnet, dass** die Deckscheibe (17) im Bereich eines Luftspaltes (6) zwischen dem Wickelkopf (5) des Stators (3) und dem Wickelkopf (9) des Läufers (7) Mittel aufweist, insbesondere axial verlaufende Klauenansätze aufweist, die die Fliehkräfte des Wickelkopfes (9) des Läufers (7) aufnehmen.

9. Doppelt gespeiste Asynchronmaschine (1) nach einem der vorhergehenden Ansprüche, das zumindest auf der Seite, die einem Schleifringsystem zugewandt ist, eine Möglichkeit an der Deckscheibe (17) vorgesehen ist, um die Zuleitungen (12) von dem Schleifringsystem zum Wicklungssystem (8) des Läufers (7) kommend zu fixieren.

10. Windkraftanlage mit einer doppelt gespeisten Asynchronmaschine (1) nach einem der vorhergehenden Ansprüche.
